# EUROPÄISCHE PATENTANMELDUNG

(11) **EP 4 573 872 A1**
(43) Veröffentlichungstag der Anmeldung: **25.06.2025**
(21) Anmeldenummer: 24211988.1
(22) Anmeldetag: 11.11.2024
(51) Int. Cl.: A01D 41/127

(54) **SELBSTFAHRENDE ERNTEMASCHINE**

(30) Priorität: 18.12.2023 DE 102023135458
(71) Anmelder: CLAAS Selbstfahrende Erntemaschinen GmbH, 33428 Harsewinkel (DE)
(72) Erfinder: Schulze Vohren, Patrick, 48336 Sassenberg (DE); Nickel, David, 33428 Harsewinkel (DE); Dieckmeyer, Sascha, 49326 Melle (DE); Schröder, Maximilian, 33330 Gütersloh (DE); Gausmann, Matthias, 46080 Osnabrück (DE)
(74) Vertreter: CLAAS Gruppe

(57) **Zusammenfassung**

Die Erfindung betrifft eine Landwirtschaftliche Erntemaschine, insbesondere selbstfahrender Mähdrescher (1), mit einer Kontrollanordnung (2), wobei die Kontrollanordnung (2) eine optische Sensoreinrichtung (3) zur Aufnahme von Bildserien eines durchlaufenden Erntegutstroms, eine Auswerteeinrichtung (4) zur Ermittlung eines Anzeigewert-Bruchkornanteils (20) und/oder eines Anzeigewert-Nichtkornanteils (21) des Erntegutstroms basierend auf einer Bildanalyse der aufgenommenen Bildserie und eine Visualisierungseinrichtung (5) zur Anzeige des Anzeigewert-Bruchkornanteils (21) und/oder des Anzeigewert-Nichtkornanteils (21) umfasst, wobei die Erntemaschine ein Fahrerassistenzsystem (22) umfasst, welches eine Eingabeeinheit (24) umfasst, wobei das Fahrerassistenzsystem (22) einen Einstellassistenten (25) zum Einstellen eines Korrekturfaktors (26) umfasst, wobei die Auswerteeinrichtung (4) derart eingerichtet ist, sodass diese mittels des eingestellten Korrekturfaktors (26) den Anzeigewert-Bruchkornanteil (20) und/oder Anzeigewert-Nichtkornanteil (21) ermittelt, wobei der Einstellassistent (25) in einem Dialog mit mehreren Dialogschritten den Korrekturfaktor (26) ermittelt.

## Beschreibung

Die Erfindung betrifft eine selbstfahrende Erntemaschine gemäß dem Oberbegriff des Anspruchs 1.

Die selbstfahrende Erntemaschine kann beispielsweise als Mähdrescher ausgeführt sein und umfasst eine Kontrollanordnung mit einer Sensoreinrichtung zur Aufnahme von Bildserien eines Erntegutstroms. Weiterhin umfasst die Kontrollanordnung eine Auswerteeinrichtung, die zunächst aus einem oder mehreren Bildern einen auf die Bildfläche bezogenen Roh-Bruchkornanteil und/oder Roh-Nichtkornanteil bestimmt. Dieser auf die Bildfläche bezogene Roh-Bruchkornanteil und/oder Roh-Nichtkornanteil wird in einem nächsten Schritt auf einen volumenbezogenen Anzeigewert-Bruchkornanteil bzw. Anzeigewert-Nichtkornanteil mittels eines Korrekturfaktors hochgerechnet. Zum Hochrechnen des Roh-Bruchkornanteils bzw. des Roh-Nichtkornanteils hin zu dem volumenbezogenen Anzeigewert-Bruchkornanteil bzw. Anzeigewert-Nichtkornanteil, wird der Roh-Bruchkornanteil bzw. Roh-Nichtkornanteil mit dem Korrekturfaktor multipliziert. Ein derartiger Mähdrescher ist aus der EP 2 826 356 B1 bekannt.

Wie die gattungsgemäße EP 2 826 356 B1 näher ausführt, kann ein solcher Korrekturfaktor empirisch, also durch Messungen, ermittelt sein und in einem Speicher der Auswerteeinrichtung hinterlegt werden.

Nachteilig an einem solchen Korrekturfaktor ist, dass der Korrekturfaktor erntegutabhängig variieren kann. Zusätzlich unterliegt der auf den Bildern gemessene Flächen-Bruchkornanteil und der Flächen-Nichtkornanteil bzw. der dem entsprechende Roh-Bruchkornanteil und Roh-Nichtkornanteil statistischen Begebenheiten. Selbst innerhalb einer Fruchtart können sich die durchschnittlichen Korngrößen des zu erntenden Ernteguts für verschiedene Feldbestände unterscheiden. Mithin kann der aus dem Roh-Bruchkornanteil und/oder dem Roh-Nichtkornanteil mittels des Korrekturfaktors ermittelte Anzeigewert-Bruchkornanteil und/oder Anzeigewert-Nichtkornanteil von dem realen Ist-Bruchkornanteil und/oder Ist-Nichtkornanteil abweichen.

Für einen Bediener kann der Korrekturfaktor einen abstrakten Zahlenwert darstellen, den er kaum oder gar nicht mit den realen Bedingungen auf einem zu bearbeitenden Feld in Bezug bringen kann. Mithin ist es für den Bediener eine besondere Herausforderung eine entsprechende Anpassung des Korrekturfaktors vorzunehmen, wenn er eine Abweichung des ihm angezeigten Anzeigewert-Bruchkornanteils und/oder des Anzeigewert-Nichtkornanteils zu dem realen Ist-Bruchkornanteil und/oder realen Ist-Nichtkornanteil des im Korntank der Erntemaschine befindlichen Ernteguts feststellt.

Es ist deshalb Aufgabe der Erfindung, die beschriebenen Nachteile des Standes der Technik zu vermeiden und insbesondere das Einstellen einer Auswerteeinrichtung zur Ermittlung eines Anzeigewert-Bruchkornanteils und/oder Anzeigewert-Nichtkornanteils zu vereinfachen.

Diese Aufgabe wird erfindungsgemäß durch die kennzeichnenden Merkmale des Anspruchs 1 gelöst. Vorteilhafte Weiterbildungen sind Gegenstand der abhängigen Ansprüche.

Gemäß dem Anspruch 1 wird eine landwirtschaftliche Erntemaschine vorgeschlagen, insbesondere selbstfahrender Mähdrescher, mit einer Kontrollanordnung, wobei die Kontrollanordnung eine optische Sensoreinrichtung zur Aufnahme von Bildserien eines durchlaufenden Erntegutstroms, eine Auswerteeinrichtung zur Ermittlung eines Anzeigewert-Bruchkornanteils und/oder eines Anzeigewert-Nichtkornanteils des Erntegutstroms basierend auf einer Bildanalyse der aufgenommenen Bildserie und eine Visualisierungseinrichtung zur Anzeige des Anzeigewert-Bruchkornanteils und/oder des Anzeigewert-Nichtkornanteils umfasst,
wobei die Erntemaschine ein Fahrerassistenzsystem umfasst, welches eine Eingabeeinheit umfasst, wobei das Fahrerassistenzsystem einen Einstellassistenten zum Einstellen eines Korrekturfaktors umfasst, der zur Ermittlung des Anzeigewert-Bruchkornanteils und/oder Anzeigewert-Nichtkornanteils vorgesehen ist, wobei der Einstellassistent in einem Dialog mit mehreren Dialogschritten den Korrekturfaktor ermittelt.

Die Erfindung hat viele Vorteile. Das Einstellen der Auswerteeinrichtung mittels eines Einstellassistenten, der in einen Dialog mit dem Bediener der Erntemaschine den Korrekturfaktor ermittelt, ermöglicht es dem Bediener anstatt einer direkten Anpassung einer abstrakten Größe bzw. eines abstrakten Zahlenwerts, im Rahmen eines Dialogs die agronomische Zielgröße anzupassen. Hierdurch wird dem Bediener das Einstellen der Auswerteeinrichtung erheblich vereinfacht. Der Bediener kann den Ist-Bruchkornanteil und/oder den Ist-Nichtkornanteil einer im Korntank befindlichen Erntegutmenge bewerten. Insofern der Bediener im Rahmen des Dialogs eine negative Beurteilung bzw. eine Abweichung zu seinen Erwartungen des Ist-Bruchkornanteil und/oder des Ist-Nichtkornanteils angibt, kann in einem weiteren Dialogschritt eine Anpassung des Korrekturfaktors vorgeschlagen werden. Der Anzeigewert-Bruchkornanteil und/oder Anzeigewert-Nichtkornanteil dient einer Steuerungseinrichtung der Erntemaschine zur Einstellung der Arbeitsgeräte, mithin ergibt sich aus der Anpassung des Anzeigewert-Bruchkornanteils und/oder des Anzeigewert-Nichtkornanteils zugleich eine Optimierung des Ist-Bruchkornanteil und/oder des Ist-Nichtkornanteils.

Eine vorteilhafte Weiterbildung sieht vor, dass die Auswerteeinrichtung aus der Bildserie einen Roh-Bruchkornanteil und/oder einen Roh-Nichtkornanteil ermittelt und aus dem Roh-Bruchkornanteil und/oder Roh-Nichtkornanteil einen Anzeigewert-Bruchkornanteil und/oder einen Anzeigewert-Nichtkornanteil berechnet.

Eine weitere vorteilhafte Weiterbildung sieht vor, dass der Roh-Bruchkornanteil und/oder der Roh-Nichtkornanteil einem Flächen-Bruchkornanteil und/oder Flächen-Nichtkornanteil mindestens eines Bildes der Bilderserie entspricht und der Anzeigewert-Bruchkornanteil und/oder der Anzeigewert-Nichtkornanteil einen auf einen Durchsatz eines Haupterntegutstroms bezogenen Volumen-Nichtkornanteil und/oder Volumen-Bruchkornanteil entspricht.

Eine vorteilhafte Weiterbildung sieht vor, dass die Visualisierungseinrichtung zum Anzeigen des Anzeigewert-Bruchkornanteils und/oder des Anzeigewert-Nichtkornanteils vorgesehen und eingerichtet ist, wobei vorzugsweise die Visualisierungseinrichtung ein Säulendiagramm anzeigt, wobei das Säulendiagramm den Anzeigewert-Bruchkornanteil und/oder den Anzeigewert-Nichtkornanteil repräsentiert. Anhand dieser Darstellung kann der Bediener auf einfache Art und Weise erkenne, ob sich der Anzeigewert-Bruchkornanteil und/oder der Anzeigewert-Nichtkornanteil in einem zulässigen Bereich befindet.

Gemäß einer vorteilhaften Ausgestaltung kann der Dialog des Einstellassistenten einen Dialogschritt A aufweisen, der die Eingabe eines Soll-Bruchkornanteils und/oder eines Soll-Nichtkornanteils umfasst. Bei dem Soll-Bruchkornanteil und/oder dem Soll-Nichtkornanteil kann es sich um eine Zielvorgabe für das sich in dem Korntank während des Erntevorgangs ansammelnde Erntegut handeln. Eine Steuereinrichtung der Erntemaschine kann die Parameter der Arbeitsgeräte derart einstellen, sodass sich der Anzeigewert-Bruchkornanteil und/oder der Anzeigewert-Nichtkornanteil dem Soll-Bruchkornanteil und/oder dem Soll-Nichtkornanteil zumindest annähern.

Gemäß einer vorteilhaften Ausgestaltung kann der Dialog des Einstellassistenten einen Dialogschritt B aufweisen, der eine Abfrage einer zu optimierenden Zielgröße umfasst, wobei als Zielgröße der Ist-Bruchkornanteil und/oder der Ist-Nichtkornanteil auswählbar sind. Insofern der Bediener der Erntemaschine mit dem Ist-Bruchkornanteil und/oder dem Ist-Nichtkornanteil des im Korntank befindlichen Ernteguts unzufrieden ist, kann er im Rahmen des Dialogschritts B auf einfache Art und Weise eine zu verbessernde Zielgröße auswählen.

Gemäß einer vorteilhaften Ausgestaltung kann der Dialog des Einstellassistenten einen Dialogschritt C aufweisen, der eine Bewertung des Ist-Bruchkornanteils und/oder des Ist-Nichtkornanteils einer in einem Korntank befindlichen Erntegutmenge umfasst. Um die Beurteilung des Ist-Bruchkornanteils und/oder Ist-Nichtkornanteils besonders einfach zu gestalten kann der Bediener im Dialogschritt C den Ist-Bruchkornanteil und/oder den Ist-Nichtkornanteil in Güteklassen einteilen, vorzugsweise in fünf Güteklasse einteilen.

Gemäß einer vorteilhaften Ausgestaltung kann der Dialog des Einstellassistenten einen Dialogschritt D aufweist, der einen Vorschlag für den einzustellenden Korrekturfaktor umfasst, wobei vorzugsweise der Vorschlag für den einzustellenden Korrekturfaktor auf der Beurteilung des Ist-Bruchkornanteils und/oder des Ist-Nichtkornanteils des in dem Korntank befindlichen Ernteguts basiert.

Vorzugsweise kann der Dialog des Einstellassistenten einen Dialogschritt E aufweisen, in dem ein Bediener den ihm angezeigten Vorschlag für den einzustellenden Korrekturfaktor bestätigt, wodurch die Auswerteeinrichtung den vorgeschlagenen Korrekturfaktor zur Berechnung des Anzeigewert-Bruchkornanteils und/oder des Anzeigewert-Nichtkornanteils verwendet, oder ablehnt.

Gemäß einer vorteilhaften Weiterbildung kann die landwirtschaftliche Erntemaschine zumindest eine Steuereinrichtung und mehrere Arbeitsgeräte umfassen, wobei die Arbeitsgeräte zumindest ein Dreschorgan, eine Trenneinrichtung und eine Reinigungsvorrichtung umfassen, wobei die Steuereinrichtung derart zum Steuern und/oder Regeln der Arbeitsgeräte eingerichtet ist, sodass der Anzeigewert-Bruchkornanteil und/oder der Anzeigewert-Nichtkornanteil an den Soll-Bruchkornanteil und/oder den Soll-Nichtkornanteil angenähert wird.

Gemäß einer vorteilhaften Weiterbildung kann die Sensoreinrichtung ein transparentes Gehäusestück aufweisen, welches ein Teil einer Wandfläche einer rohrartigen Erntegutführung, insbesondere eines Kornelevators ist.

Die vorliegende Erfindung wird nachstehend anhand eines in den Zeichnungen dargestellten Ausführungsbeispiels näher erläutert.
- Figur 1: eine schematische Seitenansicht eines Mähdreschers als vorschlagsgemäße landwirtschaftliche Erntemaschine;
- Figur 2: eine schematische Seitenansicht eines Kornelevators des Mähdreschers der Fig. 1;
- Figur 3: ein Säulendiagramm zur Darstellung eines Anzeigewert-Bruchkornanteils und eines Anzeigewert-Nichtkornanteils;
- Figur 4: einen Dialogschritt zum Einstellen eines Korrekturfaktors;
- Figur 5: einen Dialogschritt zum Einstellen eines Korrekturfaktors;
- Figur 6: einen Dialogschritt zum Einstellen eines Korrekturfaktors.

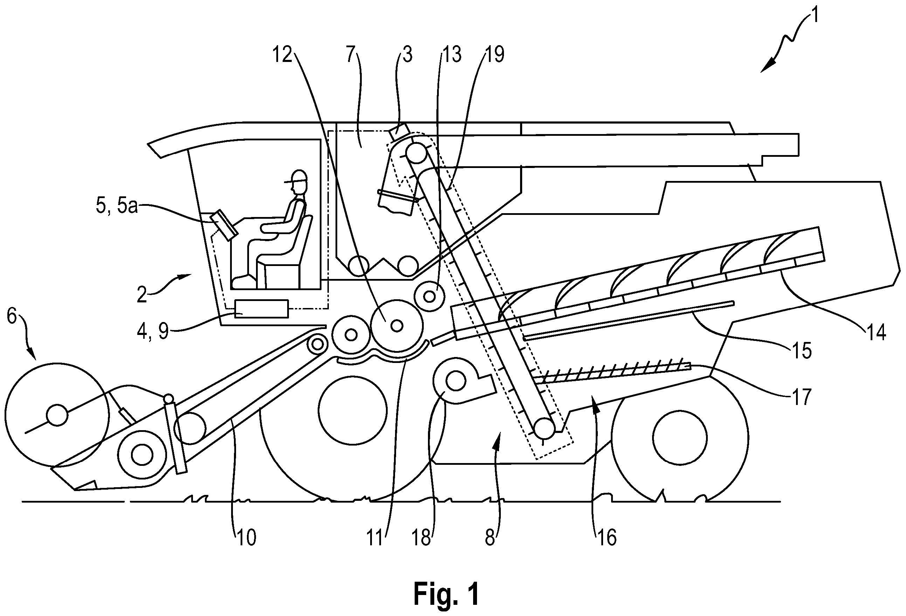

Die in der Fig. 1 dargestellte landwirtschaftliche Erntemaschine, bei der es sich hier beispielhaft um einen Mähdrescher 1 handelt, weist eine Kontrollanordnung 2 auf. Diese Kontrollanordnung 2 umfasst eine optische Sensoreinrichtung 3 zur Aufnahme von Bildserien eines durchlaufenden Haupterntegutstroms sowie eine Auswerteeinrichtung 4 zur Ermittlung eines noch zu erläuternden Anzeigewert-Bruchkornanteils 20 und/oder eines Anzeigewert-Nichtkornanteils 21 des Haupterntegutstroms basierend auf einer aufgenommenen Bildserie und eine Visualisierungseinrichtung 5 zur Anzeige des Anzeigewert-Bruchkornanteils 20 und/oder des Anzeigewert-Nichtkornanteils 21. Die Funktionsweise einer derartigen Kontrollanordnung 2 ist in der DE 10 2013 107 169 A1 offenbart, auf deren Offenbarungsgehalt hiermit vollumfänglich Bezug genommen wird.

Hierbei können insbesondere die Auswerteeinrichtung 4 und die Visualisierungseinrichtung 5 sowohl separat als auch als einzelnes Gerät ausgeführt werden. Eine Bildserie in diesem Sinne besteht aus einer beliebigen Reihe von in kurzem Abstand hintereinander aufgenommenen Einzelbildern, wobei eine solche Bildserie auch nur aus einem einzelnen Bild bestehen kann. In besonders bevorzugter Ausgestaltung besteht jede Bildserie aus einer konstanten Anzahl von Bildern.

Es können auch ein oder mehrere Bilder aus der Bildserie zur weiteren Auswertung ausgewählt werden, wobei die restlichen Bilder auch verworfen werden können. Der zeitliche Abstand zwischen den einzelnen Bildern einer Bildserie kann als Zwischenbildzeit definiert werden, wobei dann die gesamte Aufnahmedauer der Bildserie als Bildserienaufnahmedauer bezeichnet werden könnte. Die Zwischenbildzeit kann sowohl konstant als auch, was bevorzugt ist, variabel und insbesondere durch die Auswerteeinrichtung 4 einstellbar sein. Es kann auch eine Videoaufnahme stattfinden, aus welcher dann ein oder mehrere einzelne Standbilder ausgewählt werden, welche damit eine Bildserie bilden. Die Zwischenbildzeit ergibt sich in so einem Fall aus dem Zeitversatz zwischen den einzelnen Bildern in analoger Weise. Die einzelnen Bilder der Bildserie können unterschiedliche Bildparameter, also insbesondere eine unterschiedliche Winkelperspektive, Beleuchtungszeit, Bildaufnahmedauer, Spektrum des Beleuchtungslichtes usw., aufweisen. Die einzelnen Bilder können auch von einer verteilten Sensoreinrichtung 3 aus mehreren Einzel-Sensoreinrichtungen aufgenommen worden sein, wobei dann auch diese aus unterschiedlichen Perspektiven aufgenommenen Bilder zu einer einzelnen Bildserie zusammengefügt werden können.

Unter dem Begriff des "Erntegutstroms" der Erntemaschine ist vorliegend der Strom des verarbeiteten Ernteguts auf dem Ernteguttransportweg der Erntemaschine zu verstehen, welcher Ernteguttransportweg speziell bei dem Mähdrescher 1 bei dem Schneidwerk 6 beginnt und jedenfalls bis zum Korntank 7 des Mähdreschers 1 führt. Der Begriff des "Haupterntegutstroms" bezeichnet nun denjenigen Teil des Erntegutstroms, welcher den überwiegenden Teil des geernteten Guts, bezogen auf den gesamten Ernteguttransportweg, bildet. Anders ausgedrückt ist damit nicht ein (Teil-)Erntegutstrom gemeint, welcher etwa durch eine potenziell vorhandene, kleinere Nebenabzweigung des Ernteguttransportwegs in der Art eines Bypass bewegt wird.

Mit dem Begriff "Bruchkornanteil" bzw. "Nichtkornanteil" ist der Anteil der zerbrochenen Körner an allen Körnern im Erntegutstrom einerseits und der Anteil von Material im Erntegutstrom, welches kein Korn im Sinne des Ernteguts ist, andererseits gemeint. Es kann also in den Nichtkornanteil auch Material einfließen, welches zwar eigentlich auch Korn darstellt, aber kein Korn des aktuell geernteten Ernteguts ist. Hierbei bezieht sich der Begriff "Roh-Bruchkornanteil" bzw. "Roh-Nichtkornanteil" auf einen auf einer Bildfläche der Bildserie erfassten Bruchkornanteil bzw. Nichtkornanteil.

Dem Bediener der Erntemaschine wird in noch näher zu erläuternder Weise ein volumenbezogener Anzeigewert-Bruchkornanteil 20 und/oder ein Anzeigewert-Nichtkornanteil 21 angezeigt. Der ermittelte Anzeigewert-Bruchkornanteil 20 und/oder Anzeigewert-Nichtkornanteil 21 kann auf einem einzelnen Bild der Bildserie, auf der ganzen Bildserie oder auf einer speziellen Auswahl von einem oder mehreren Bildern der Bildserie basieren. Dabei können ein oder mehrere Bilder aus der Bildserie ausgewählt werden, welche gemäß einem Qualitätskriterium die beste Aufnahme darstellen. Ein solches Qualitätskriterium kann eine besonders geeignete Helligkeits-, Kontur- oder Kontrastverteilung sein.

Die Auswerteeinrichtung 4 nimmt prinzipiell eine Bildanalyse der Bildserie oder eines Teiles der Bildserie vor, bei welcher vorzugsweise zunächst Bruchkörner und Nichtkörner in dem Bild anhand geeigneter Algorithmen erkannt werden. Es wird dann die von den Bruchkörnern und Nichtkörnern eingenommene Fläche auf dem zweidimensionalen Bild als Flächenverhältnis berechnet, wobei das jeweilige Flächenverhältnis dem Roh-Bruchkornanteil bzw. dem Roh-Nichtkornanteil entspricht. Im nächsten Schritt wird das Flächenverhältnis mithilfe einer geeigneten Extrapolationsfunktion auf einen Volumenanteil hochgerechnet und so der dem Bediener angezeigte Anzeigewert-Bruchkornanteil 20 bzw. Anzeigewert-Nichtkornanteil 21 ermittelt.

Die Kontrollanordnung 2 nimmt zyklisch Bildserien auf und zeigt innerhalb einer vorbestimmten Verarbeitungszeit nach der Aufnahme einer Bildserie einen auf der Bildserie basierenden aktuellen Anzeigewert-Bruchkornanteil 20 und/oder Anzeigewert-Nichtkornanteil 21 an. Die Zyklizität bezieht sich also auf die Bildserie, wobei als maßgeblicher Zeitpunkt für die Bestimmung der Zyklizität etwa der Aufnahmezeitpunkt des ersten Bildes der Bildserie definiert werden kann. Es kann auch die oben definierte Bildserienaufnahmedauer gleich der Zykluszeit der Bildserie sein, was einer quasikontinuierlichen Aufnahme von Bildern ohne merkliche Pause zwischen einzelnen Bildserien entspricht.

Die Anzeige eines auf der Bildserie basierenden Anzeigewert-Bruchkornanteils 20 und/oder Anzeigewert-Nichtkornanteils 21 nach der Aufnahme der Bildserie innerhalb einer vorbestimmten Verarbeitungszeit kann auch als Echtzeitbedingung oder Echtzeitanforderung verstanden werden. Es ist also eine Verarbeitungszeit vorbestimmt, innerhalb der die Anzeige eines Anzeigewert-Bruchkornanteils 20 und/oder Anzeigewert-Nichtkornanteils 21 nach Aufnahme einer Bildserie erfolgt, wobei dieser Anzeigewert-Bruchkornanteil 20 und/oder Anzeigewert-Nichtkornanteil 21 auf der aufgenommenen Bildserie basiert. Mit anderen Worten ist als maximale Zeit zwischen diesen beiden Ereignissen - gleichsam die Laufzeit zwischen der Aufnahme einer Bildserie und der Anzeige eines darauf basierenden Anzeigewert-Bruchkornanteils 20 und/oder Anzeigewert-Nichtkornanteils 21 - eben die Verarbeitungszeit definiert, innerhalb welcher sich die Information in der aufgenommenen Bildserie in dem angezeigten Anzeigewert-Bruchkornanteil und/oder Anzeigewert-Nichtkornanteil widerspiegelt. Wenn nun, wie bevorzugt, für jede aufgenommene Bildserie ein auf der Bildserie basierender Anzeigewert-Bruchkornanteil 20 und/oder Anzeigewert-Nichtkornanteil 21 angezeigt wird, dann kann der angezeigte Anzeigewert-Bruchkornanteil 20 und/oder Anzeigewert-Nichtkornanteil 21 in gleicher Weise zyklisch aktualisiert werden, wie die Bildserie aufgenommen wird.

Bevorzugt weist die Erntemaschine steuerbare Arbeitsgeräte 8 auf und die Kontrollanordnung 2 weist eine Steuereinrichtung 9 zur Parametereinstellung der Arbeitsgeräte 8 basierend auf dem Anzeigewert-Bruchkornanteil 20 und/oder dem Anzeigewert-Nichtkornanteil 21 auf. Wie auch im Ausführungsbeispiel des Mähdreschers 1 in der Fig. 1 dargestellt, kann die Steuer- und Regelungseinrichtung 9 im selben Gerät wie die Auswerteeinrichtung 4 angeordnet sein.

Zu den steuerbaren Arbeitsgeräten 8 zählen bei dem hier dargestellten Mähdrescher 1 neben dem bereits erwähnten Schneidwerk 6 der mit diesem verbundene Schrägförderer 10. Von diesem aus wird der Erntegutstrom des Mähdreschers 1 an die von dem Dreschkorb 11 ummantelten Dreschorgane 12 übergeben. Über eine Umlenktrommel 13 gelangt der Erntegutstrom in die hier als Trennrotor ausgebildete Trenneinrichtung 14, in welchem freibewegliche Körner des Erntegutstroms in einen unteren Bereich abgeschieden werden. Von hier aus gelangt der Erntegutstrom über den Rücklaufboden 15 zu einer Reinigungsvorrichtung 16, die wie hier dargestellt aus mehreren Siebebenen 17 und einem Gebläse 18 besteht. Von hier aus führt der Kornelevator 19 den Erntegutstrom schließlich zum Korntank 7.

Die genannten Arbeitsgeräte 8 lassen sich steuern und sehen eine Parametereinstellung vor. Dabei ist der Zusammenhang zwischen der Parametereinstellung der Arbeitsgeräte 8 und der Qualität des Ernteguts komplex und sowohl von der Art des Ernteguts als auch von einer Vielzahl von weiteren Randbedingungen abhängig. Beispielhaft sei darauf hingewiesen, dass etwa bei zu starkem Betrieb der Dreschorgane 12 ein übermäßiges Zerbrechen von Körnern im Erntegut auftritt und auch mehr Energie beim Dreschen verbraucht wird. Andererseits kann eine zu niedrige Dreschintensität der Dreschorgane 12 zu einem geringeren Verdruschvolumen und damit zu einem niedrigen Ertrag führen.

Ebenso ist bei der Reinigungsvorrichtung 16 die Parametereinstellung so vorzunehmen, dass einerseits möglichst alle Körner des Ernteguts im Erntetransportweg weitergeführt, dafür aber Verunreinigungen und andere unerwünschte Bestandteile ausgesondert werden. Selbst unter bekannten Randbedingungen stellt die optimale Parametereinstellung der Arbeitsgeräte 8 eine Herausforderung dar. Bevorzugt kann eine automatische oder teilautomatische Ansteuerung und Parametereinstellung der Arbeitsgeräte 8 durch die Steuereinrichtung 9 der Kontrollanordnung 2 erfolgen.

Weiter ist bevorzugt vorgesehen, dass die Auswerteeinrichtung 4 den Roh-Bruchkornanteil und/oder Roh-Nichtkornanteil und einen gemittelten Anzeigewert-Bruchkornanteil 20 und/oder gemittelten Anzeigewert-Nichtkornanteil 21 ermittelt. Hierbei weist der Roh-Bruchkornanteil und/oder der Roh-Nichtkornanteil entweder keine zeitliche Mittelung oder jedenfalls eine geringere, insbesondere zeitliche Mittelung gegenüber dem gemittelten Anzeigewert-Bruchkornanteil 20 und/oder dem gemittelten Anzeigewert-Nichtkornanteil 21 auf. Es ist vorgesehen, dass die Visualisierungseinrichtung 5 den Anzeigewert-Bruchkornanteil und/oder Anzeigewert-Nichtkornanteil anzeigt. Eine Verwirrung des Bedieners durch Sprünge in der Anzeige lässt sich also dadurch vermeiden, dass der für den Bediener angezeigte aktuelle Anzeigewert-Bruchkornanteil 20 und/oder aktuelle Anzeigewert-Nichtkornanteil 21 zumindest eine mäßige Form der Mittelung erfahren hat.

Bevorzugt ist, dass der Roh-Bruchkornanteil und/oder der Roh-Nichtkornanteil auf einen Durchsatz des Haupterntegutstroms hochgerechnet wird, indem ein gemessener Flächen-Bruchkornanteil und/oder Flächen-Nichtkornanteil mindestens eines Bildes der Bildserie mittels eines jeweiligen Korrekturfaktors auf einen Volumen-Bruchkornanteil bzw. Anzeigewert-Bruchkornanteil 20 und/oder einen Volumen-Nichtkornanteil bzw. Bediner-Nichtkornanteil 21 bezogen wird. Der Korrekturfaktor ist jeweils für die Ermittlung des Bruchkornanteils und des Nichtkornanteils unterschiedlich. Ein solcher Korrekturfaktor, welcher auch als Funktion des Flächen-Bruchkornanteils bzw. des Flächen-Nichtkornanteils vorliegen kann, berücksichtigt den Umstand, dass die prozentual eingenommene Fläche von Bruchkörnern oder Nichtkörnern in einem Bild nicht notwendigerweise dem prozentual eingenommenen Volumen an Bruchkörnern oder Nichtkörnern im Haupterntegutstrom entspricht. Hier kann der Korrekturfaktor für den Bruchkornanteil insbesondere sowohl von dem Flächen-Bruchkornanteil als auch von dem Flächen-Nichtkornanteil abhängig sein.

Ebenso kann der Korrekturfaktor für den Nichtkornanteil sowohl von dem Flächen-Nichtkornanteil als auch von dem Flächen-Bruchkornanteil abhängig sein.

Der besagte Korrekturfaktor, welcher insbesondere erntegutabhängig ist, wurde vorzugsweise empirisch, also durch Messungen, ermittelt und in der Auswerteeinrichtung 4 hinterlegt. Um den Anzeigewert-Bruchkornanteil 20 bzw. den Anzeigewert-Nichtkornanteil 21 zu erhalten, wird der Flächen-Bruchkornanteil bzw. der Flächen-Nichtkornanteil mit dem jeweiligen Korrekturfaktor multipliziert. Das Hochrechnen auf den Durchsatz des Haupterntegutstroms bezieht sich auf das Volumen der Gesamtheit des Haupterntegutstroms, wie er durch die Erntemaschine und speziell den Mähdrescher 1 geführt ist. Es ist bevorzugt, dass der Anzeigewert-Bruchkornanteil 20 und/oder der Anzeigewert-Nichtkornanteil 21, bzw. der aktuelle Volumen-Bruchkornanteil und/oder der aktuelle Volumen-Nichtkornanteil, als prozentualer Anteil angezeigt wird.

Wie bereits vorstehend angedeutet, kann der Korrekturfaktor erntegutabhängig variieren. Zusätzlich unterliegt der auf den Bildern gemessene Flächen-Bruchkornanteil und der Flächen-Nichtkornanteil bzw. der dem entsprechende Roh-Bruchkornanteil und Roh-Nichtkornanteil statistischen Begebenheiten. Selbst innerhalb einer Fruchtart können sich die durchschnittlichen Korngrößen des zu erntenden Ernteguts für verschiedene Feldbestände unterscheiden. Mithin kann der aus dem Roh-Bruchkornanteil und/oder dem Rohn-Nichtkornanteil ermittelte Anzeigewert-Bruchkornanteil 20 und/oder Anzeigewert-Nichtkornanteil 21 von dem realen Ist-Bruchkornanteil 39 und/oder Ist-Nichtkornanteil 40 abweichen. Hier und vorzugsweise entspricht der Ist-Bruchkornanteil bzw. der Ist-Nichtkornanteil 40 den auf das Volumen bezogenen realen Bruchkornanteil bzw. realen Nichtkornanteil einer im Korntank 7 befindlichen Erntegutmenge. Aus diesem Grund umfasst die erfindungsgemäße Erntemaschine ein noch näher zu erläuterndes Fahrerassistenzsystem 22, mittels dessen der Korrekturfaktor 26 mit der die Umrechnung des Roh-Bruchkornanteils und/oder Roh-Nichtkornanteils hin zu dem Anzeigewert-Bruchkornanteil 20 und/oder Bediener-Nichtkornteil 21 einstellbar ist. Das Fahrerassistenzsystem 22 umfasst eine Eingabeeinheit 24, die der Interaktion mit dem Bediener der Erntemaschine dient. Die Eingabeeinheit 24 kann von der Visualisierungseinrichtung 5 gebildet sein. Mittels einer Anpassung des Korrekturfaktors 26 kann der Bediener den ihm angezeigten Anzeigewert-Bruchkornanteil 20 und/oder den Anzeigewert-Nichtkornanteil an den tatsächlichen Ist-Bruchkornanteil 39 und/oder Ist-Nichtkornanteil 40 anpassen.

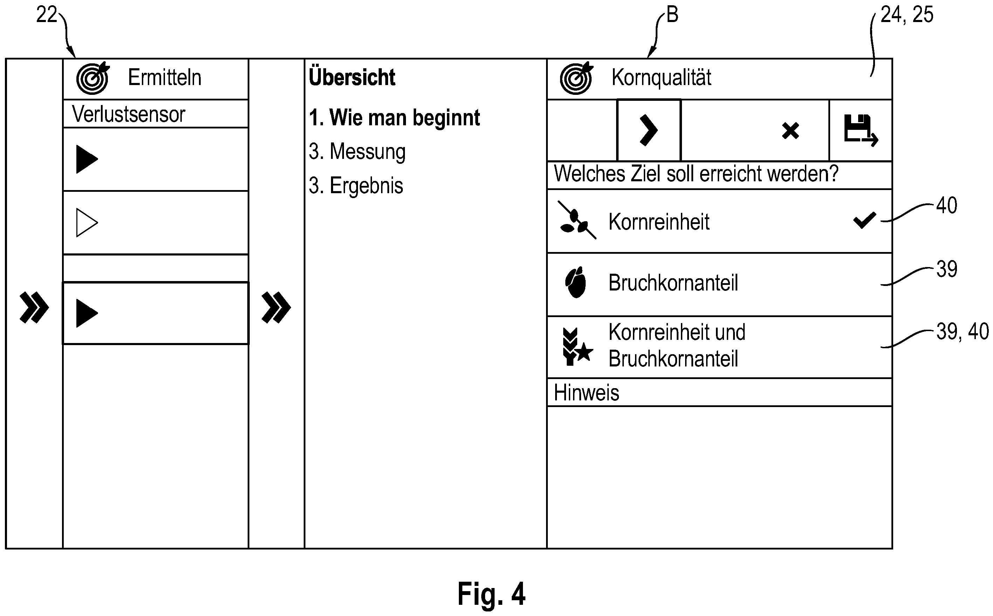

Zum Einstellen des Korrekturfaktors 26 umfasst das Fahrerassistenzsystem 22 einen Einstellassistenten 25. Dieser Einstellassistent 25 ist vorzugsweise ein auf dem Fahrerassistenz-system 22 laufendes Softwareprogramm. Ein solcher Einstellassistent 25 ist beispielhaft in den Figuren 4 bis 6 abgebildet. Der Einstellassistent 25 ermittelt in einem natürlichsprachigen Dialog mit mehreren Dialogschritten den einzustellenden Korrekturfaktor 26.

Der Dialog des Einstellassistenten 25 kann einen hier nicht näher dargestellten Dialogschritt A umfassen, in dem der Bediener der Erntemaschine einen Soll-Bruchkornanteil 27 und/oder einen Soll-Nichtkornanteil 28 eingibt. Bei dem Soll-Bruchkornanteil 27 und/oder dem Soll-Nichtkornanteil 28 handelt es sich um eine Zielvorgabe für das sich in dem Korntank 7 während des Erntevorgangs ansammelnde Erntegut. Die Steuereinrichtung 9 stellt die Parameter der Arbeitsgeräte 8 derart ein, sodass sich der Anzeigewert-Bruchkornanteil 20 und/oder der Anzeigewert-Nichtkornanteil 21 dem Soll-Bruchkornanteil 27 und/oder dem Soll-Nichtkornanteil 28 zumindest annähern.

Der Dialog des Einstellassistenten 25 kann einen in Fig. 4 dargestellten Dialogschritt B umfassen, der eine Abfrage einer zu optimierenden Zielgröße aufweist, wobei als Zielgröße der Ist-Bruchkornanteil 39 und/oder der Ist-Nichtkornanteil 40 auswählbar sind. Insofern der Bediener der Erntemaschine mit dem Ist-Bruchkornanteil 39 und/oder dem Ist-Nichtkornanteil 40 des im Korntank 7 befindlichen Ernteguts unzufrieden ist, kann er im Rahmen des Dialogschritts B die zu verbessernde Zielgröße auswählen.

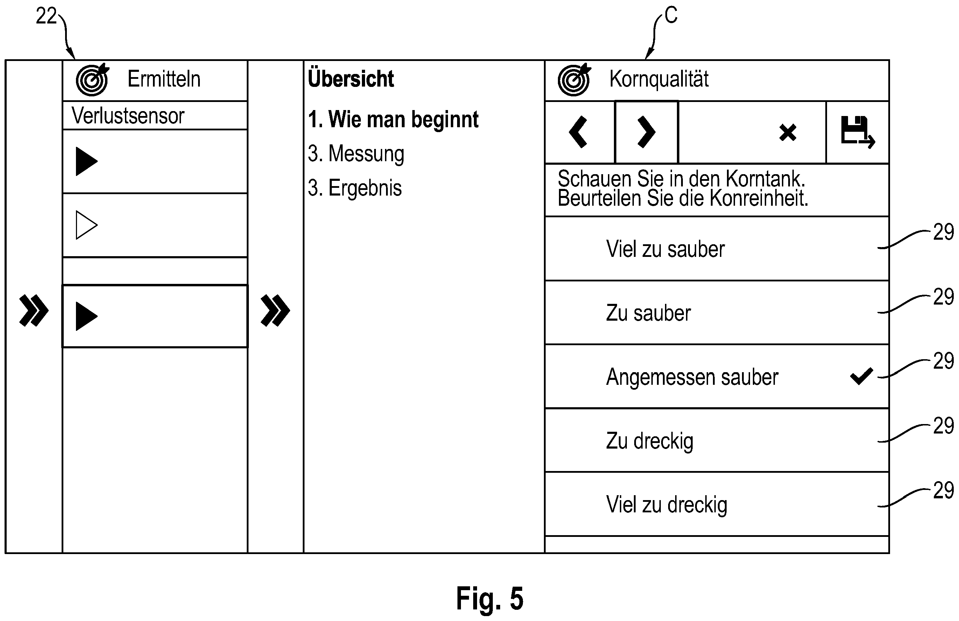

Der Dialog des Einstellassistenten 25 kann einen in Fig. 5 dargestellten Dialogschritt C aufweisen, der eine Bewertung des Ist-Bruchkornanteils 39 und/oder des Ist-Nichtkornanteils 40 der in dem Korntank 7 befindlichen Erntegutmenge umfasst. Hier und vorzugsweise kann der Bediener im Dialogschritt C den Ist-Bruchkornanteil 39 und/oder den Ist-Nichtkornanteil 40 in mindestens drei Güteklassen, vorzugsweise in fünf Güteklassen 29 einteilen. Beispielhaft sind in Fig. 5 fünf Güteklassen 29 für den Ist-Nicht-Kornanteil 40 dargestellt. Die Güteklassen 29 umfassen eine fünfstufige Auswahl von zu viel Nicht-Kornanteil 40 bis zu wenig Nicht-Kornanteil 40.

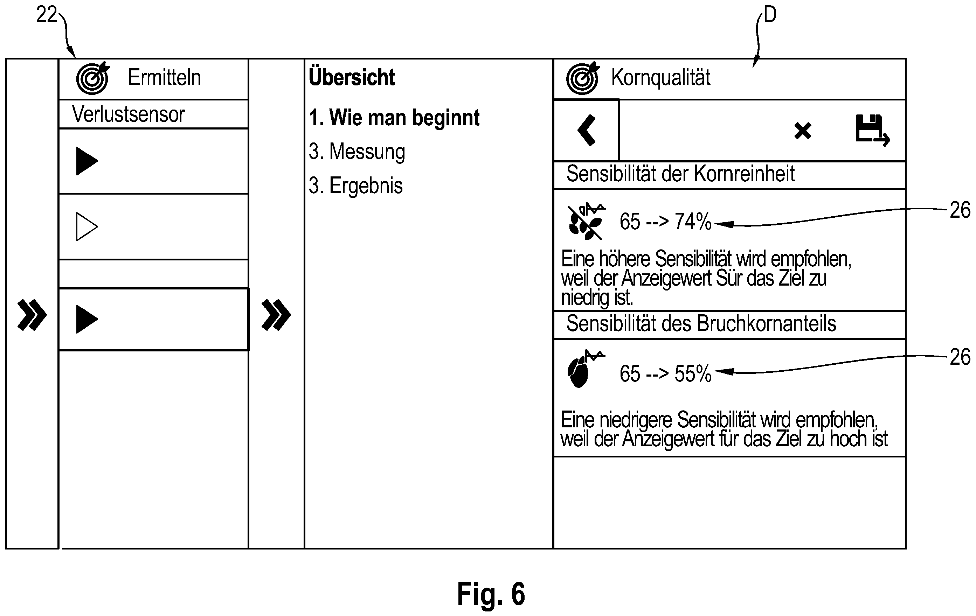

Hier umfasst der Dialog des Einstellassistenten 25 einen in Fig. 6 dargestellten Dialogschritt D, der einen Vorschlag für den einzustellenden Korrekturfaktor 26 aufweist, wobei der Vorschlag für den einzustellenden Korrekturfakotr 26 auf der Beurteilung des Ist-Bruchkornanteils 39 und/oder des Ist-Nichtkornanteils 40 des in dem Korntank 7 befindlichen Ernteguts basiert. Der Bediener kann den Vorschlag annehmen oder ablehnen. Eine Annahme des Vorschlags bewirkt, dass der Korrekturfaktor zur Berechnung des Anzeigewert-Bruchkornanteils 20 und/oder der Korrekturfaktor zur Berechnung des Anzeigewert-Nichtkornanteils 21 angepasst wird. Anhand des Anzeigewert-Bruchkornanteils 20 und/oder des Anzeigewert-Nichtkornanteils 21 steuert bzw. regelt die Steuereinrichtung 9 die Arbeitsparameter der Arbeitsgeräte 8. Mithin erfolgt mit der Anpassung des Korrekturfaktors zugleich, dass die Arbeitsgeräte 8 derart angesteuert werden, sodass sich der Ist-Bruchkornanteil 39 und/oder der Ist-Nichtkornanteil 40 dem Soll-Bruchkornanteil 27 und/oder dem Soll-Nichtkornanteil 28 annähern.

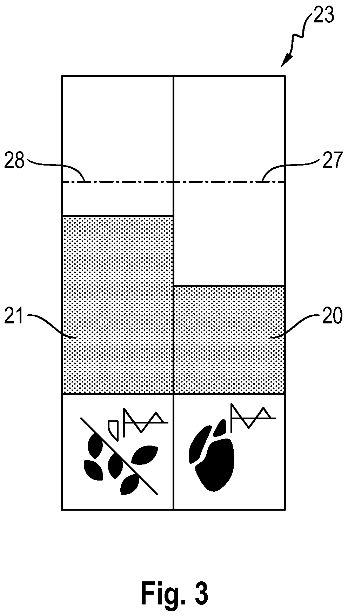

Zur Anzeige ist bevorzugt vorgesehen, dass die Visualisierungseinrichtung 5 ein in Fig. 3 dargestelltes Säulendiagramm 23 anzeigt, wobei das Säulendiagramm 23 den Anzeigewert-Bruchkornanteil 20 und/oder den Anzeigewert-Nichtkornanteil 21 darstellt. Zugleich ist in dem Säulendiagramm 20 eine dem Soll-Bruchkornanteil 27 und dem Soll-Nichtkornanteil 28 entsprechende Markierung abgebildet, sodass der Bediener darüber informiert ist, ob sich der ermittelte Anzeigewert-Bruchkornanteil 20 und/oder Anzeigewert-Nichtkornanteil 21 in einem zulässigen Bereich befinden.

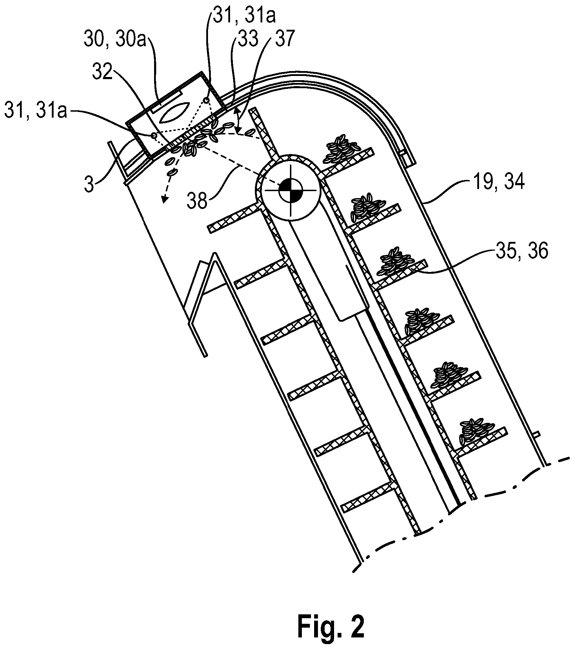

Diesbezüglich ist vorgesehen, dass die Sensoreinrichtung 3 - wie in der Fig. 2 dargestellt - einen Lichtdetektor 30, bei dem es sich vorzugsweise um einen CMOS (Komplementärer Metall-Oxid-Halbleiter) -Lichtsensor 30a handelt und eine Beleuchtungsvorrichtung 31, vorzugsweise gebildet durch eine Leuchtdiodenanordnung 31a, umfasst.

Hinsichtlich der genannten Beleuchtungsvorrichtung 31 ist bevorzugt vorgesehen, dass die Beleuchtungsvorrichtung 31 für jedes Bild einer Bildserie jeweils einen Leuchtimpuls erzeugt.

Neben der internen Ausgestaltung der Sensoreinrichtung 3 gibt es auch bevorzugte Anordnungen und Ausgestaltungen der Sensoreinrichtung 3 innerhalb der Erntemaschine. Speziell ist bevorzugt, dass, wie aus der Fig. 2 erkennbar, die Sensoreinrichtung 3 ein transparentes Gehäusestück 32 aufweist, welches Teil einer insbesondere örtlich ebenen Wandfläche 33 einer vorzugsweise rohrartigen Erntegutführung 34 ist. Bei der Erntegutführung 34 kann es sich insbesondere um den Kornelevator 19 handeln. Mit anderen Worten ist das transparente Gehäusestück 32, welches zum Durchlass sowohl der Leuchtimpulse als auch ihrer jeweiligen Reflexion dient, ein Teil der Wandung der Erntegutführung 34 und steht gegenüber dieser Wandung weder vor noch ist sie zurückgesetzt. Eine solche Anordnung hat den Vorteil, dass die Sensoreinrichtung 3 nicht nur besonders nah an den Erntegutstrom angeordnet werden kann und ihr Vorhandensein die Führung des Erntegutstroms auf dem Ernteguttransportweg möglichst wenig beeinflusst, sondern sie bewirkt auch, dass die Bestandteile des Erntegutstroms selber durch ihr Auftreffen auf das transparente Gehäusestück 32 von alleine seine Reinigung bewirken. Ein Verstauben wird damit wirksam verhindert.

Es ist bevorzugt, dass die Erntegutführung 34 eine Erntegutantriebsanordnung 35, vorzugsweise Erntegutpaddel 36, aufweist, welche den Haupterntegutstrom so bewegen, dass dieser zumindest teilweise auf das transparente Gehäusestück 32 gelenkt wird. Wenn auf diese Weise gewährleistet wird, dass im Wesentlichen stets Erntegut des Haupterntegutstroms in unmittelbarer Nähe des transparenten Gehäusestücks 32 oder dieses berührend vorhanden ist, dann kann die Sensoreinrichtung 3 stets auf eine fixe Entfernung, vorzugsweise auf einen Punkt im Wesentlichen unmittelbar jenseits des transparenten Gehäusestücks 32, fokussiert sein und es bleibt dennoch gewährleistet, dass an dieser fokussierten Entfernung der Haupterntegutstrom erfasst werden kann.

Eine bevorzugte Variante sieht hierbei vor, dass der Haupterntegutstrom, zumindest teilweise, in einem spitzen Winkel 37, welcher also weniger als 45° und insbesondere weniger als 22,5° beträgt, auf das transparente Gehäusestück 32 gelenkt wird. Ein beispielhafter spitzer Winkel 37 ist in der Fig. 2 dargestellt. Auf diese Weise wird gewährleistet, dass einerseits ein möglicher Aufprall des Haupterntegutstroms auf dem Gehäusestück 32 diesen nicht wesentlich von seinem normalen Verlauf ablenkt und andererseits eine definierte Relativbewegung zwischen Haupterntegutstrom und Gehäusestück 32 stattfindet.

**Bezugszeichenliste:**

| | | | |
|---|---|---|---|
| 1 | Mähdrescher | 32 | Gehäusestück |
| 2 | Kontrollanordnung | 33 | Wandfläche |
| 3 | Sensoreinrichtung | 34 | Erntegutführung |
| 4 | Auswerteeinrichtung | 35 | Erntegutantriebsanordnung |
| 5 | Visualisierungseinrichtung | 36 | Erntegutpaddel |
| 6 | Schneidwerk | 37 | Winkel |
| 7 | Korntank | 38 | Erntegutführungsquerschnitts |
| 8 | Arbeitsgeräte | 39 | Ist-Bruchkornanteil |
| 9 | Steuereinrichtung | 40 | Ist-Nichtkornanteil |
| 10 | Schrägförderer | | |
| 11 | Dreschkorb | B | Dialogschritt |
| 12 | Dreschorgane | C | Dialogschritt |
| 13 | Umlenktrommel | D | Dialogschritt |
| 14 | Trenneinrichtung | E | Dialogschritt |
| 15 | Rücklaufboden | | |
| 16 | Reinigungsvorrichtung | | |
| 17 | Siebebenen | | |
| 18 | Gebläse | | |
| 19 | Kornelevator | | |
| 20 | Anzeigewert-Bruchkornanteil | | |
| 21 | Anzeigewert-Nichtkornanteil | | |
| 22 | Fahrerassistenzsystem | | |
| 23 | Säulendiagramm | | |
| 24 | Eingabeeinheit | | |
| 25 | Einstellassistent | | |
| 26 | Korrekturfaktor | | |
| 27 | Soll-Bruchkornanteil | | |
| 28 | Soll-Nichtkornanteil | | |
| 29 | Güteklasse | | |
| 30 | Lichtdetektor | | |
| 30a | Lichtsensor | | |
| 31 | Beleuchtungsvorrichtung | | |
| 31a | Leuchtdiodenanordnung | | |

## Patentansprüche

1. Landwirtschaftliche Erntemaschine, insbesondere selbstfahrender Mähdrescher (1), mit einer Kontrollanordnung (2), wobei die Kontrollanordnung (2) eine optische Sensoreinrichtung (3) zur Aufnahme von Bildserien eines durchlaufenden Erntegutstroms, eine Auswerteeinrichtung (4) zur Ermittlung eines Anzeigewert-Bruchkornanteils (20) und/oder eines Anzeigewert-Nichtkornanteils (21) des Erntegutstroms basierend auf einer Bildanalyse der aufgenommenen Bildserie und eine Visualisierungseinrichtung (5) zur Anzeige des Anzeigewert-Bruchkornanteils (21) und/oder des Anzeigewert-Nichtkornanteils (21) umfasst,
wobei die Erntemaschine ein Fahrerassistenzsystem (22) umfasst, welches eine Eingabeeinheit (24) umfasst,
**dadurch gekennzeichnet, dass**
das Fahrerassistenzsystem (22) einen Einstellassistenten (25) zum Einstellen eines Korrekturfaktors (26) umfasst, wobei die Auswerteeinrichtung (4) derart eingerichtet ist, sodass diese mittels des eingestellten Korrekturfaktors (26) den Anzeigewert-Bruchkornanteil (20) und/oder Anzeigewert-Nichtkornanteil (21) ermittelt, wobei der Einstellassistent (25) in einem Dialog mit mehreren Dialogschritten den Korrekturfaktor (26) ermittelt.

2. Landwirtschaftliche Erntemaschine nach Anspruch 1, **dadurch gekennzeichnet, dass** die Auswerteeinrichtung (4) aus der Bildserie einen Roh-Bruchkornanteil und/oder einen Roh-Nichtkornanteil ermittelt und aus dem Roh-Bruchkornanteil und/oder Roh-Nichtkornanteil einen Anzeigewert-Bruchkornanteil (20) und/oder einen Anzeigewert-Nichtkornanteil (21) berechnet.

3. Landwirtschaftliche Erntemaschine nach Anspruch 2, **dadurch gekennzeichnet, dass** der Roh-Bruchkornanteil und/oder der Roh-Nichtkornanteil einem Flächen-Bruchkornanteil und/oder Flächen-Nichtkornanteil mindestens eines Bildes der Bilderserie entspricht und der Anzeigewert-Bruchkornanteil (20) und/oder der Anzeigewert-Nichtkornanteil (21) einen auf einen Durchsatz eines Haupterntegutstroms bezogenen Volumen-Nichtkornanteil und/oder Volumen-Bruchkornanteil entspricht.

4. Landwirtschaftliche Erntemaschine nach einem der Ansprüche 1 bis 3, **dadurch gekennzeichnet, dass** die Visualisierungseinrichtung (5) zum Anzeigen des Anzeigewert-Bruchkornanteils (20) und/oder des Anzeigewert-Nichtkornanteils (21) vorgesehen und eingerichtet ist, wobei vorzugsweise die Visualisierungseinrichtung (5) ein Säulendiagramm (23) anzeigt, wobei das Säulendiagramm (23) den Anzeigewert-Bruchkornanteil (20) und/oder den Anzeigewert-Nichtkornanteil (21) repräsentiert.

5. Landwirtschaftliche Erntemaschine nach einem der Ansprüche 1 bis 4, **dadurch gekennzeichnet, dass** der Dialog des Einstellassistenten (25) einen Dialogschritt A aufweist, der die Eingabe eines Soll-Bruchkornanteils (27) und/oder eines Soll-Nichtkornanteils (28) umfasst.

6. Landwirtschaftliche Erntemaschine nach einem der Ansprüche 1 bis 5, **dadurch gekennzeichnet, dass** der Dialog des Einstellassistenten (25) einen Dialogschritt B aufweist, der eine Abfrage einer zu optimierenden Zielgröße umfasst, wobei als Zielgröße ein Ist-Bruchkornanteil (39) und/oder ein Ist-Nichtkornanteil (40) auswählbar sind.

7. Landwirtschaftliche Erntemaschine nach einem der Ansprüche 1 bis 6, **dadurch gekennzeichnet, dass** der Dialog des Einstellassistenten (25) einen Dialogschritt C aufweist, der eine Bewertung des Ist-Bruchkornanteils (39) und/oder des Ist-Nichtkornanteils (40) einer in einem Korntank (7) befindlichen Erntegutmenge umfasst.

8. Landwirtschaftliche Erntemaschine nach einem der Ansprüche 1 bis 7, **dadurch gekennzeichnet, dass** der Dialog des Einstellassistenten (25) einen Dialogschritt D aufweist, der einen Vorschlag für den einzustellenden Korrekturfaktor (26) umfasst, wobei vorzugsweise der Vorschlag für den einzustellenden Korrekturfaktor (26) auf der Beurteilung des Ist-Bruchkornanteils (39) und/oder des Ist-Nichtkornanteils (40) der in dem Korntank (7) befindlichen Erntegutmenge basiert.

9. Landwirtschaftliche Erntemaschine nach Anspruch 8, **dadurch gekennzeichnet, dass** der Dialog des Einstellassistenten (25) einen Dialogschritt E aufweist, in dem ein Bediener den ihm angezeigten Vorschlag für den einzustellenden Korrekturfaktor (26) bestätigt, wodurch die Auswerteeinrichtung (4) den vorgeschlagenen Korrekturfaktor (26) zur Berechnung des Anzeigewert-Bruchkornanteils (20) und/oder des Anzeigewert-Nichtkornanteils (21) verwendet, oder ablehnt.

10. Landwirtschaftliche Erntemaschine nach einem der Ansprüche 5 bis 9, **dadurch gekennzeichnet, dass** die landwirtschaftliche Erntemaschine zumindest eine Steuereinrichtung (9) und mehrere Arbeitsgeräte (8) umfasst, wobei die Arbeitsgeräte (8) zumindest ein Dreschorgan (12), eine Trenneinrichtung (14) und eine Reinigungsvorrichtung (16) umfassen, wobei die Steuereinrichtung (9) derart zum Steuern und/oder Regeln der Arbeitsgeräte (8) eingerichtet ist, sodass der Anzeigewert-Bruchkornanteil (20) und/oder der Anzeigewert-Nichtkornanteil (21) an den Soll-Bruchkornanteil (27) und/oder den Soll-Nichtkornanteil (28) angenähert wird.

11. Landwirtschaftliche Erntemaschine nach einem der Ansprüche 1 bis 10, **dadurch gekennzeichnet, dass** die Sensoreinrichtung (3) ein transparentes Gehäusestück (32) aufweist, welches ein Teil einer Wandfläche (33) einer rohrartigen Erntegutführung (34), insbesondere eines Kornelevators (19) ist.
